(19) Europäisches Patentamt
European Patent Office
Office européen des brevets

(11) **EP 2 522 695 A1**

(12) **EUROPÄISCHE PATENTANMELDUNG**

(43) Veröffentlichungstag:
**14.11.2012 Patentblatt 2012/46**

(21) Anmeldenummer: **11165413.3**

(22) Anmeldetag: **10.05.2011**

(51) Int Cl.:
*C08K 3/26* (2006.01)     *C08K 3/36* (2006.01)
*C08K 13/02* (2006.01)     *C08L 67/02* (2006.01)
*C08K 5/3492* (2006.01)
*C08L 67/04* (2006.01)     *C08L 25/14* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **BASF SE
67056 Ludwigshafen (DE)**

(72) Erfinder: **Die Erfindernennung liegt noch nicht vor**

(54) **Biologisch abbaubare Polyesterfolie**

(57)     Die vorliegende Erfindung betrifft eine biologisch abbaubare Polyesterfolie enthaltend:

i) 75 bis 100 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;

ii) 0 bis 25 Gew.-%, bezogen auf das Gesamtgewicht der Komponenten i bis ii, Polymilchsäure;

iii) 10 bis 25 Gew.-%, bezogen auf das Gesamtgewicht der Komponenten i bis v, Calciumcarbonat;

iv) 3 bis 15 Gew.-%, bezogen auf das Gesamtgewicht der Komponenten i bis v, Talk;

v) 0 bis 1 Gew.-%, bezogen auf das Gesamtgewicht der Komponenten i bis v, eines Epoxidgruppen-haltigen Copolymers auf Basis Styrol, Acrylsäureester und/oder Methacrylsäureester;

vi) 0 bis 2 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

EP 2 522 695 A1

## Beschreibung

Die vorliegende Erfindung betrifft eine biologisch abbaubare Polyesterfolie enthaltend:

i) 75 bis 100 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;

ii) 0 bis 25 Gew.-%, bezogen auf das Gesamtgewicht der Komponenten i bis ii, Polymilchsäure;

iii) 10 bis 25 Gew.-%, bezogen auf das Gesamtgewicht der Komponenten i bis v, Calciumcarbonat;

iv) 3 bis 15 Gew.-%, bezogen auf das Gesamtgewicht der Komponenten i bis v, Talk;

v) 0 bis 1 Gew.-%, bezogen auf das Gesamtgewicht der Komponenten i bis v, eines Epoxidgruppen-haltigen Copolymers auf Basis Styrol, Acrylsäureester und/oder Methacrylsäureester;

vi) 0 bis 2 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

Weiterhin betrifft die Erfindung die Verwendung dieser Polyesterfolien und einen Masterbatch enthaltend:

i) 75 bis 95 Gew.-%, bezogen auf das Gesamtgewicht der Komponenten, eines biologisch abbaubaren Polyesters ausgewählt aus der Gruppe bestehend aus: Polyester auf Basis von aliphatischen und/oder aromatischen Dicarbonsäuren und aliphatischen Dihydroxyverbindung Polymermilchsäure;

vi) 5 bis 25 Gew.-%, bezogen auf das Gesamtgewicht der Komponenten, 2-(4,6-bis-biphenyl-4-yl-1,3,5-triazin-2-yl)-5-(2-ethyl-(n)-hexyloxy)phenol.

sowie ein Verfahren zur Herstellung eines bevorzugt transparenten Mulchfilms mit definierter "Zerfallsdauer" unter Verwendung des zuvor genannten Masterbatches. 10.05.2011

Der in dem Masterbatch verwendete UV Absorber (vi) basiert auf einem extrem stabilen Chromophor der zur Klasse der Triazine gehört und über ein außergewöhnliches Absorptionsvermögen verfügt. Durch seinen sehr hohen Absorptionsgrad sowie einer sehr breiten Absorptionskurve übertrifft dieser UV Absorber im Wellenlängenbereich 290 und 350 Nanometer aller anderen heute eingesetzten UV Absorber. Weiterhin verfügt der UV Absorber über eine hervorragende Lichtstabilität und geringe Flüchtigkeit, wodurch sich das Absorbtionsvermögen im Laufe der Zeit kaum verändert.

Mit Füllstoff versehene, biologisch abbaubare Polyesterfolien sind aus der WO2002/016468 bekannt. Auf eine Kombination der Füllstoffe Calciumcarbonat (Komponente iii) und Talk (Komponente iv) wird in dieser Schrift nicht hingewiesen. Die aus der WO2002/016468 bekannten Polyesterfolien können hinsichtlich ihrer Verarbeitungseigenschaften (geringe Stabilität der Folienblase) und Weiterreißfestigkeit nicht immer überzeugen.

Ziel der vorliegenden Erfindung war es somit Polyesterfolien mit verbesserter Weiterreißfestigkeit zu entwickeln, die zuverlässig zu Blasfolien verarbeitet werden können.

Biologisch abbaubare Polyesterfolien können beispielsweise als Mulchfolien eingesetzt werden. Hier ist neben dem Erfordernis der hohen Weiterreißfestigkeit die Stabilität gegenüber Sonnenlicht insbesondere für transparente Mulchfolien entscheidend. Schwarz (Ruß) eingefärbte Mulchfolien verfügen bereits über einen UV absorbierten Effekt, allerdings wird auch die Wärmestrahlung absorbiert wodurch weniger Wärme bis zum Boden durchgelassen wird und somit zumindest für bestimme Anbauprodukte wie z.B. Melonen, Mais ein geringere Ausbeute/Ernteverfrühung erreicht werden kann.

Aus WO 2009/071475 sind Mulchfolien auf Basis von beispielsweise Polyethylen bekannt, die Hydroxyphenyl-Triazine als Stabilisator enthalten. Polyesterfilme auf Basis von PMMA werden in der WO 2009/071475 ebenfalls erwähnt. Biologisch abbaubare Polyesterfilme werden in der WO 2009/071475 nicht explizit beschrieben. Biologisch abbaubare transparente Mulchfolien auf Basis eines biologisch abbaubaren Polyesters bestehend aus aliphatischen und/oder aromatischen Dicarbonsäuren und aliphatischen Dihydroxyverbindung weisen in der Praxis häufig eine zu kurze Standzeit, je nach Wanddicke, von nur 2 Wochen auf. Für die UV- Stabilisation von Mulchfolien werden üblicherweise Lichtschutzmittel wie UV Absorber und HALS Stabilisatoren oder eine Kombination von beiden empfohlen. UV Absorber filtern den ultravioletten Anteil aus dem Licht, wodurch die Energie des absorbierten Lichts in Wärme umgewandelt wird. Durch den Einsatz von HALS Stabilisatoren wird die Reaktion von photooxidativ gebildeten Spaltprodukten im Polymer unterbunden. Durch die Kombination der genannten Wirkstoffe wird ein synergistischer Effekt zur Eindämmung der beiden unterschiedlichen Schadensmechanismen erreicht. Untersuchungen an teilaromatischer Polyester der Marke Ecoflex® (BASF SE) haben ergeben, dass Hydroxy-Phenyl-Triazin basierte UV Absorber wie Tinuvin® 1577 auch in Kombination mit einem HALS Stabilisator wie Tinuvin® 111 oder UV Absorber auf Basis Benzophenone wie Uvinul® 3008, zu einer gewissen stabilisierenden Wirkung führt, die aber für transparente Mulchfolien, insbesondere mit geringer Wandstärke, bei weitem nicht ausreichend ist.

Weiterhin können diese Mulchfolien vor allem in dünnen Ausführungsformen (unter 30 microns) hinsichtlich ihrer Weiterreißfestigkeit nicht überzeugen.

Ziel der vorliegenden Erfindung war es demnach weiterhin biologisch abbaubare, bevorzugt transparente Mulchfolien mit längeren Standzeiten im Feld und höherer Weiterreißfestigkeit bereitzustellen.

Demgemäß wurden die biologisch abbaubare Polyesterfolie enthaltend:

i) 75 bis 100 Gew.-%, bevorzugt 80 bis 95 Gew.-%, besonders bevorzugt 85 bis 95 Gew.-%, bezogen auf das Gesamtgewicht der Komponenten i bis ii, eines biologisch abbaubaren Polyesters auf Basis von aliphatischen und/ oder aromatischen Dicarbonsäuren und einer aliphatischen Dihydroxyverbindung;

ii) 0 bis 25 Gew.-%, bevorzugt 5 bis 20 Gew.-%, besonders bevorzugt 5 bis 15 Gew.-%, bezogen auf das Gesamtgewicht der Komponenten i bis ii, Polymilchsäure;

iii) 10 bis 25 Gew.-%, bevorzugt 10 bis 20 Gew.-%, besonders bevorzugt 12 bis 17 Gew.-%, bezogen auf das Gesamtgewicht der Komponenten i bis v, Calciumcarbonat;

iv) 3 bis 15 Gew.-%, bevorzugt 5 bis 10 Gew.-%, besonders bevorzugt 5 bis 8 Gew.-%, bezogen auf das Gesamtgewicht der Komponenten i bis v, Talk;

v) 0 bis 1 Gew.-%, bevorzugt 0,01 bis 0,8 Gew.-%, besonders bevorzugt 0,05 bis 0,5 Gew.-%, bezogen auf das Gesamtgewicht der Komponenten i bis v, eines Epoxidgruppen-haltigen Copolymers auf Basis Styrol, Acrylsäureester und/oder Methacrylsäureester;

vi) 0 bis 2 Gew.-%, bevorzugt 0,1 bis 1,5 Gew.-%, besonders bevorzugt 0,5 bis 1,2 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol entwickelt.

Der Einsatz der Komponente vi ist lediglich sinnvoll für Folien, die dauerhaft dem Sonnenlicht ausgesetzt sind, wie beispielsweise Mulchfolien.

Der Vergleich der Ergebnisse der Tabellen 4 und 5 zeigt, dass Folien mit einem Polymilchsäureanteil von 5 bis 20 Gew.-%, besonders bevorzugt von 5 bis 15 Gew.-%, bezogen auf das Gesamtgewicht der Komponenten i bis ii, eine besonders hohe Weiterreißfestigkeit aufweisen.

Weiterhin bevorzugt sind Mulchfolien des Anspruchs 3 mit den Komponenten i bis vi, die sowohl hinsichtlich ihrer Weiterreißfestigkeit wie auch ihrer Standzeit im Feld verbessert sind.

Im Folgenden wird die Erfindung näher beschrieben.

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester oder aliphatische Polyester aus aliphatischen Dicarbonsäuren und aliphatischen Diolen in Betracht. Gemeinsam ist diesen Polyestern, dass sie biologisch abbaubar nach DIN EN 13432 sind. Selbstverständlich sind auch Mischungen mehrerer solcher Polyester als Komponente i geeignet.

Unter teilaromatischen Polyestern (Komponente i) sollen erfindungsgemäß auch Polyesterderivate verstanden werden wie Polyetherester, Polyesteramide oder Polyetheresteramide und Polyesterurethane. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO-A 2010/034710). Insbesondere sind unter teilaromatischen Polyestern Produkte wie Ecoflex® (BASF SE) und Eastar® Bio, Origo-Bi® (Novamont) zu verstehen.

Zu den besonders bevorzugten teilaromatischen Polyestern zählen Polyester, die als wesentliche Komponenten

A) eine Säurekomponente aus:

  a1) 30 bis 99 mol-% mindestens einer aliphatischen Dicarbonsäure oder deren esterbildende Derivate oder Mischungen davon

  a2) 1 bis 70 mol-% mindestens einer aromatischen Dicarbonsäure oder deren esterbildendem Derivat oder Mischungen davon und

B) 98 bis 102 mol% bezogen auf die Säurekomponente A eine Diolkomponente B ausgewählt aus mindestens einem $C_2$-bis $C_{12}$-Alkandiol oder Mischungen davon und

C) 0,01 bis 3 Gew.-% bezogen auf die Komponenten A und B einer Komponente C ausgewählt aus

  c1) einer Verbindung mit mindestens drei zur Ester- oder Amidbildung befähigten Gruppen,

  c2) eines Di- oder Polyisocyanates,

  c3) eines Di- oder Polyepoxids

oder Mischungen aus c1) bis c3) enthalten.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, $\alpha$-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Insbesondere bevorzugt sind die folgenden aliphatisch-aromatischen Polyester: Polybutylenadipatterephthalat (PBAT), Polybutylensebacatterephthalat (PBSeT) oder Polybutylensuccinatterephthalat (PBST).

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

Die bevorzugten teilaromatischen Polyester sind charakterisiert durch ein Molekulargewicht ($M_n$) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Unter aliphatischen Polyestern (Komponente i) werden Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPla vermarktet. Neuere Entwicklungen sind in der WO-A 2010/034711 beschrieben.

Die Polyester in Komponente i können auch Mischungen aus aliphatisch-aromatischen Polyestern und rein aliphatischen Polyestern enthalten wie beispielsweise Mischungen aus PBAT und PBS.

Als Komponente ii kommt insbesondere Polymilchsäure (PLA) in Frage.

Polymilchsäure mit dem folgenden Eigenschaftsprofil wird bevorzugt eingesetzt: einer Schmelzvolumenrate (MVR bei 190° C und 2.16 kg nach ISO 1133 von 0.5 - vorzugsweise 2 - bis 30 insbesondere 9 ml/10 Minuten

einem Schmelzpunkt unter 240° C;

einem Glaspunkt (Tg) größer 55°C

einem Wassergehalt von kleiner 1000 ppm

einem Monomeren-Restgehalt (Lactid) von kleiner 0.3%.

einem Molekulargewicht von größer 80 000 Dalton.

Bevorzugte Polymilchsäuren sind beispielsweise NatureWorks® 6201D, 6202 D, 6251 D, 3051 D und insbesondere 4020 D oder 4043D (Polylmilchsäure der Fa. NatureWorks).

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) $CO_2$-freie Luft durch gereiften Kompost während des Kompostierens strömen gelassen und dieser einem definierten Temperaturprogramm unterworfen. Hierbei wird die biologische Abbaubarkeit über das Verhältnis der Netto-$CO_2$-Freisetzung der Probe (nach Abzug der $CO_2$-Freisetzung durch den Kompost ohne Probe) zur maximalen $CO_2$-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die eingangs genannten biologisch abbaubaren Polyesterfolien sind zur Herstellung von Netzen und Gewebe, Schlauchfolien, Chill-Roll-Folien mit und ohne einer Orientierung in einem weiteren Verfahrensschritt, mit und ohne Metallisierung oder SiOx-Beschichtung geeignet.

Insbesondere eignen sich die eingangs definierten Polyesterfolien enthaltend die Komponenten i) bis v) bzw. i) bis vi) für Schlauchfolien und Stretchfolien. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Landwirtschaftsfolien (Mulchfilme), Folienbeutel zur Verpackung von Nahrungsmitteln, abziehbare Verschlussfolie - transparent oder undurchsichtig - schweißbare Verschlussfolie - transparent oder undurchsichtig - , Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko-und Müsliriegel, peelbare Deckelfolien für Molkereiverpackungen (Joghurt, Sahne etc.), Obst und Gemüse, halbharte Verpackungen für geräucherte Wurst und Käse.

Die Polyesterfolien enthaltend die Komponenten i bis vi) weisen nach der Extrusion zu ein- oder mehrlagigen Schlauch-, Cast- oder Pressfolien eine deutlich höhere Reißfestigkeit (gemäß EN ISO 6383-2:2004) auf verglichen mit Mischungen ohne die Komponenten ii bis v). Die Weiterreißfestigkeit ist eine sehr wichtige Produkteigenschaft vor allem im Bereich dünner (Schlauch-)folien für z.B. Biomüllbeutel oder dünnwandige Tragetaschen (z.B. Hemdchentragetaschen, Obstbeutel). Daneben ist sie von besonderer Bedeutung bei Mulchfolien im Agrarbereich.

Mit Lichtschutzmittel vi) versehene Polyesterfolien kommen insbesondere für Anwendungen, die für den Außenbereich bestimmt sind wie im Bausektor und insbesondere für Agrarprodukte, zum Einsatz. Unter Agrarprodukten werden Mulchfolien, Abdeckfolien, Silo-Folien, Folienbändchen, Gewebe, Vlies-Stoffe, Clips, Textilien, Zwirne, Fischernetze, Umverpackungen wie Schwergutsäcke für beispielsweise Torf, Dünger Zement, Pflanzenschutzmittel, Saatgut oder Blumentöpfe verstanden.

Agrarprodukte sind in der Regel Wind und Wetter und insbesondere dem Sonnenlicht ausgesetzt. Um eine definierte Standzeit im Feld zu gewährleisten, müssen sie stabilisiert werden. Als besonders effizient hat sich hierbei Komponente vi) erwiesen. Ein Masterbatch enthaltend:

i) 75 bis 95 Gew.-%, bezogen auf das Gesamtgewicht der Komponenten i bis v, eines biologisch abbaubaren Polyesters auf Basis von aliphatischen und/oder aromatischen Dicarbonsäuren und aliphatischen Dihydroxyverbindung;

vi) 5 bis 25 Gew.-%, bezogen auf das Gesamtgewicht der Komponenten i bis v, 2-(4,6-bis-biphenyl-4-yl-1,3,5-triazin-2-yl)-5-(2-ethyl-(n)-hexyloxy)phenol;

hat sich als besonders hilfreich zur Herstellung von vorzugsweise transparenten oder transluzenten Mulchfolien erwiesen.

Insbesondere wurde ein Verfahren zur Herstellung von transluzenten Mulchfolien enthaltend:

i) 75 bis 100 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;

ii) 0 bis 25 Gew.-%, bezogen auf das Gesamtgewicht der Komponenten i bis ii, Polymilchsäure;

iii) 0 bis 25 Gew.-%, bezogen auf das Gesamtgewicht der Komponenten i bis v, Calciumcarbonat;

iv) 0 bis 15 Gew.-%, bezogen auf das Gesamtgewicht der Komponenten i bis v, Talk;

v) 0 bis 1 Gew.-%, bezogen auf das Gesamtgewicht der Komponenten i bis v, eines Epoxidgruppen-haltigen Copolymers auf Basis Styrol, Acrylsäureester und/oder Methacrylsäureester;

vi) 0,1 bis 1,5 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol gefunden.

In Abhängigkeit von der Schichtdicke des Mulchfilms und der Klimazone, in der der Mulchfilm ausgebracht werden soll, lässt sich mit Hilfe des Masterbatches eine definierte Standzeit einstellen. Als Maßschnur kann hier der Bewitterungstest nach DIN EN ISO 4892-2 dienen. Für eine Zeitdauer von 250 h wird die Folie einer Xenonbogenlampe ausgesetzt. Dies entspricht einer Bewitterung von 3 Monaten bei Außenlagerung in Klimazone Südeuropa.

Anwendungstechnische Messungen:

Die Molekulargewichte Mn und Mw der teilaromatischen Polyester wurde gemäß DIN 55672-1 bestimmt Elutionsmittel Hexafluoroisopropanol (HFIP) + 0,05 Gew.-% Trifluoroessigsäure-Ka-Salz; Die Kalibrierung erfolgte mit eng verteilten Polymethylmethacrylat-Standards. Die Bestimmung der Viskositätszahlen erfolgte nach DIN 53728 Teil 3, 3. Januar 1985, Kapillarviskosimetrie. Zum Einsatz kam ein Mikro-Ubbelohde Viskosimeter, Typ M-II. Als Lösungsmittel wurde das Gemisch: Phenol/o-Dichlorbenzol im Gewichtsverhältnis 50/50 verwendet.

Der E-Modul und die Reißdehnung wurden mittels eines Zugversuchs an Pressfolien mit einer Dicke von etwa 420 $\mu$m gemäß ISO 527-3 : 2003 bestimmt.

Die Weiterreißfestigkeit wurde durch einen Elmendorf-Test gemäß EN ISO 6383-2:2004 mit einem Gerät der Fa. ProTear an Prüfkörpern mit konstantem Radius (43 mm Risslänge) bestimmt. In einem Puncture Resistance Test an Pressfolien mit einer Dicke von 420 $\mu$m wurde die maximale Kraft und die Brucharbeit der Polyester gemessen:

Bei der verwendeten Prüfmaschine handelt es sich um ein Zwick 1120 ausgerüstet mit einem kugelförmigen Stempel mit einem Durchmesser von 2,5 mm. Die Probe, ein kreisförmiges Stück der zu vermessenden Folie, wurde senkrecht zum Prüfstempel eingespannt und dieser mit einer konstanten Prüfgeschwindigkeit von 50 mm/min durch die Ebene, die durch die Einspannvorrichtung aufgespannt wird, hindurchgefahren. Während des Versuchs wurde sowohl die Kraft wie auch die Dehnung aufgezeichnet und so die Durchstoßarbeit bestimmt.

Die Abbauraten der biologisch abbaubaren Polyestermischungen und der zum Vergleich hergestellten Mischungen wurden wie folgt bestimmt:

Aus den biologisch abbaubaren Polyestermischungen und den zum Vergleich hergestellten Mischungen wurden durch Pressen bei 190°C jeweils Folien mit einer Dicke von 30 $\mu$m hergestellt. Diese Folien wurden jeweils in quadratische Stücke mit Kantenlängen von 2 x 5 cm geschnitten. Das Gewicht dieser Folienstücke wurde jeweils bestimmt und als "100 Gew.-%" definiert. Über einen Zeitraum von vier Wochen wurden die Folienstücke in einem Trockenschrank in einer mit befeuchteter Komposterde gefüllten Kunststoffdose auf 58°C erhitzt. Im Wochenabstand wurde jeweils das verbleibende Gewicht der Folienstücke gemessen und auf Gew.-% (bezogen auf das zu Versuchsbeginn ermittelte und als "100 Gew.-%" definierte Gewicht) umgerechnet.

Masterbatchherstellung (Lichtschutzmittel)

I. Eingesetzte Materialien:

A1) Polybutylenadipatterephthalat

Zur Herstellung des Polyesters A1 wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponenten und Säurekomponente 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1 h langsam zudosiert.
Der so erhaltene Polyester A1 (Komponente i-1) wies eine Schmelztemperatur von 119°C und ein Molekulargewicht ($M_n$) von 23000 g/mol auf.

B1-B13) Lichtschutzmittel, UV-Absorber (UVA) und UV-Stabilisatoren (HALS) gemäß Tabelle 1:

Tabelle 1:

| Nr. | Name | Typ | Chemische Bezeichnung |
|---|---|---|---|
| Erfindungsgemäßes Lichtschutzmittel | | | |
| B1 | CGX UVA 006 (WO2009/071475, Beispiel A) | UVA | 2-(4,6-Bis-biphenyl-4-yl-[1,3,5]triazin-2-yl)-5-(2-ethyl-hexyloxy)-phenol |
| Vergleichssysteme | | | |
| B2 | TINUVIN P CAS Nr: 2440-22-4 | UVA | 2-(2H-Benzotriazol-2-yl)-p-kresol |
| B3 | TINUVIN 234 CAS Nr: 70321-86-7 | UVA | 2-(2H-Benzotriazol-2-yl)-4,6-bis(1-methyl-1-phenylethyl)phenol |
| B4 | TINUVIN 312 CAS Nr: 23949-66-8 | UVA | N-(2-Ethoxyphenyl)-N'-(2-ethylphenyl)oxamid |
| B5 | TINUVIN 326 CAS Nr: 3896-11-5 | UVA | 2-(3-tert-butyl-2-hydroxy-5-methylphenyl)-5-chloro-2H-benzotriazol |
| B6 | TINUVIN 360 CAS Nr: 103597-45-1 | UVA | 2,2'-Methylenbis(6-(2H-benzotriazol-2-yl)-4-(1,1,3,3-tetramethylbutyl)phenol) |
| B7 | TINUVIN 1577 CAS Nr: 147315-50-2 | UVA | 2-(4,6-Diphenyl-1,3,5-triazin-2-yl)-5-[(hexyl)oxy]-phenol |
| B8 | CHIMASSORB 81 CAS Nr: 1843-05-6 | UVA | Benzophenon |
| B9 | Uvinul 3030 CAS Nr: 178671-58-4 | UVA | 2-Propenoic acid, 2-cyano-3,3-diphenyl-, 2,2-bis[[(2-cyano-1-oxo-3,3-diphenyl-2-propenyl)oxy]methyl]-1,3-propanediyl ester |
| B10 | CHIMASSORB 944 CAS Nr: 71878-19-8 | HALS | |
| B11 | TINUVIN NOR 371 | HALS | HALS Triazin Derviat |
| | TINUVIN 111 | | |

| Vergleichssysteme | | | |
|---|---|---|---|
| B12 | CAS Nr: 106990-43-6 und 65447-77-0 | HALS | |
| B13 | TINUVIN 622 CAS Nr: 65447-77-0 | HALS | |

II. Compoundierung der Masterbatche MB1 und V-MB2 bis V-MB13:

9000 g A1, und je 1000 g von B1-B13 wurden auf einem Extruder vom Typ Werner & Pfleiderer MC-26 bei einer Massetemperatur von ca. 220-260 °C compoundiert. A1 wurde per Cold-Feed in Zone 0 dosiert, B1-B13 wurde in Zone 4 per seitenfeed zudosiert und rückwärtig in Zone 3 die eingetragene Luft durch eine Vakuumentgasung entfernt.
Die so produzierten Masterbatche erhielten die Bezeichnungen MB1 und V-MB2 bis V-MB13

III. Folienherstellung:

Folienblasanlage 1

Die Schlauchfolienanlage wurde mit einem 30D langen Extruder mit einer 75mm Schnecke betrieben, der mit einer gekühlten, genuteten Einzugszone und einer Barriereschnecke mit Maddockscher- und Kreuzlochmischer ausgestattet war. Die Zonentemperaturen wurden so gewählt, dass die Massetemperatur zwischen 170 und 190 °C lag. Die Düsentemperaturen lagen im Bereich von 165-170 °C. Der Düsendurchmesser betrug 225 mm, die Spaltweite 1,5 mm, der Durchsatz 140 kg/h, die Massetemperatur 188°C und der Massedruck vor dem Sieb 185 bar. Das Aufblasverhältnis von 4,0 : 1 ergab eine Liegebreite des Folienschlauchs von 1400 mm. Weitere Anlagenkomponenten waren wie folgt:

- Gravimetrische Dosierstation für 4 Komponenten (Chargenmischer)
- Kapazitive Dickenmessung
- Dickenregelung über Segment Kühlring
- Doppellippenkühlring
- Innen- und Außenkühlung mit gekühlter Luft
- 2 Wickelstationen

Folienblasanlage 2

Die Schlauchfolienanlage wurde mit einem 25D langen Extruder mit einer 45mm Schnecke betrieben, der mit einer genuteten Einzugszone und einer Dreizonenschnecke mit Scher- und Mischteil ausgestattet war. Die Einzugszone wurde bei maximalem Durchsatz mit kaltem Wasser gekühlt. Die Zonentemperaturen wurden so gewählt, dass die Massetemperatur zwischen 170 und 190 °C lag. Die Düsentemperaturen lagen im Bereich von 165-185 °C. Der Düsendurchmesser betrug 75mm, die Spaltweite 0,8 mm. Das Aufblasverhältnis von 3,5 : 1 ergab eine Liegebreite des Folienschlauchs von 412 mm.

IV. Wirkungsweise Lichtschutzmittel

Eingesetzte Materialen

1-i) teilaromatischer Polyester A1
2-i) Batch A: 10 Gew.-%iger Masterbatch von Erucasäureamid in Polyester A1
2-ii) Batch B: 60 Gew.-%iger Masterbatch von Calciumcarbonat in Polyester A1
2-iii) Batch C: 25 Gew.-%iger Masterbach von Pigmentruß in Polyester A1
3-i) MB1 und V-MB2 bis V-MB13: 10 Gew.-%iger Masterbatch von Lichtschutzmittel in Polyester A1

Die Materialien wurde anschließend auf Folienanlage 2 als Blend der Komponenten 1-i, 2-i, 2-ii und 3i (per Cold Feed am Extruder) zu 12 μm dicken Folien verarbeitet. Die jeweiligen Lichtschutzmittel-Masterbatche MB1 und V-MB2 bis V-MB13 wurden mit einer Konzentration von 10% zudosiert, was einer Wirkstoffkonzentration von 10.000 ppm in der Folie entsprach. Zusätzlich kam für einige ausgewählte schwarz eingefärbte Folien HALS Stabilisatoren bzw.

Kombinationen aus HALS und UVA unter Zugabe von Komponente 2-iii) zum Einsatz. Die Folienmuster wurden anschließend einer künstlichen Bewitterung (Xenonbogenlampe) nach DIN EN ISO 4892-2, Verfahren A für eine Zeitdauer von 250 h (dies entspricht einer Bewitterung von 3 Monaten bei Außenlagerung in Klimazone Südeuropa) unterzogen und mit einem Zugversuch gemäß ISO 527-3 nach der Bewitterung geprüft. Die Ergebnisse wurden mit einer nicht bewitterten Referenzfolie verglichen. Die Folienmechanik nach der Bewitterung wurde wie folgt beurteilt: Folien, welche nach der Bewitterungsperiode einen Abfall von mehr als 50% in der Reißdehnung aufwiesen, konnten im Regelfall zumindest nach der simulierten Zeitdauer nicht mehr eingesetzt werden:

$$\Delta L\ [\%]=L1/L2$$

$\Delta L$ : Verbleibende Reißdehnung
L1: Reißdehnung gemäß ISO 527-3 Referenzfolie, nicht bewitterte Folie hier (334 %)
L2: Reißdehnung gemäß ISO 527-3 bewitterte Folie

Die Ergebnisse der im Zugversuche ermittelten Reißdehnung an den 12 $\mu$m Folien aus den Versuchen Nr. 1-14 wurden mit der Reißdehnung einer nicht bewitterten Folie basierend auf den Komponenten 97% 1-i + 1 % 2-i+ 2% 2-ii (transparente Folie) verglichen. Die Rezepturen und Ergebnisse sind in Tabelle 2 zusammengefasst:

Tabelle 2

| Nr. | Blend | UVA/Hals Typ | $\Delta L[\%]$ |
|---|---|---|---|
| Versuch mit erfindungsgemäßen Masterbatch | | | |
| 1 | 87% 1-i + 1 % 2-i+ 2% 2-ii + 10% MB1 (HPT) | Biphenyl Hydro-Phenyl-Triazin | 97% |
| Versuche mit Vergleichs-Masterbatchen | | | |
| 2 | 87% 1-i+ 1% 2-i+ 2% -2-ii+10% V-MB2 40% | Benzotriazol | |
| 3 | 87% 1-i + 1 % 2-i+ 2% 2-ii + 10% V-MB3 | Benzotriazol | 43% |
| 4 | 87% 1-i+1% 2-i+ 2% 2-ii+10% V-MB4 | Oxanilide | 50%: |
| 5 | 87% 1-i + 1 % 2-i+ 2% 2-ii + 10% V-MB5 | Benzotriazol | 60% |
| 6 | 87% 1-1+1% 2-i +2% 2-ii + 10% V-MB6 | Benzotriazol | 55 |
| 7 | 87% 1-i+ 1% 2-i+ 2% 2-ii + 10% V-MB7 | Hydro-Phenyl-Triazin (HPT) | 51 |
| 8 | 87% 1-i+ 1% 2-i+ 2% 2-ii+ 10% V-MB8 | Benzophenone | 70% |
| 9 | 87% 1-i + 1 % 2-i+ 2% 2-ii + 10% V-MB9 | Cyanoacrylat | 55% |
| 10 | 87% 1-i+ 1% 2-i+ 2% 2-ii+ 10% V-MB10 | HALS | 20% |
| 11 | 87% 1-i+ 1% 2-i+ 2% 2-ii+ 10% V-MB11 | HALS | nicht meßbar |
| 12 | 87% 1-i +1% 2i+ 2% 2-ii+ 10% V-MB12 | HALS | nicht meßbar |
| 13 | 87% 1-i+ 1% 2-i+ 2% 2-ii+ 10% V-MB13 | HALS | nicht meßbar |
| 14 | 81% 1-i+ 1% 2-i+ 2% 2-ii+ 10% V-MB7 6% V-MB13 | Hydro-Phenyl-Triazin (HPT) / HALS Kombination | 40% |

Die Ergebnisse zeigen deutlich, dass UV Absorber auf Basis Benzotriazol eine gewisse lichtstabilisierende Wirkung auf die produzierten Folien haben, die aber insbesondere für sehr dünne transparente Mulchfolien, die zudem beim Auslegen gedehnt und zusätzlich ausgedünnt werden, nicht ausreichend ist. HALS Stabilisatoren auch in Kombination mit UV Absorbern zeigen keine Stabilisierung gegenüber UV-Strahlung.
Wie schon Eingangs beschrieben, bestätigt sich der stabilisierende Effekt von Benzophenon UV Absorbern auf teilaromatische Polyester A1. Auch nach einer künstlichen Bewitterung von 250h wird noch eine Reißdehnung von 70% der Referenzfolie (nicht bewittert) erreicht, allerdings zeigt die Zug-Dehnungskurve eine ausgeprägte Streckgrenze (duktiles Verhalten). Auch die Reißfestigkeit erreicht nur einen Wert von 10 MPa der deutlich unter der Reißfestigkeit der Referenzfolie mit ca. 34 MPa liegt.
Mit dem erfindergemäßen Masterbatch enthaltend das Lichtschutzmittel 2-(4,6-Bis-biphenyl-4-yl-1,3,5-triazin-2-yl)-5-(2-ethyl-(n)-hexyloxy)phenol (MB1), lässt sich eine ausgesprochen gute UV Stabilisierung erreichen. Auch nach einer künstlichen Bewitterung von 250h entspricht die Reißdehnung quasi dem gemessenen Wert der Referenzfolie. Auch die Zug-Dehnungskurve zeigt keine Streckgrenze. Der auf Triazin basierte Chromophor stellt damit eine sehr sichere Stabilisierung von sehr dünnen Folien auf Basis teilaromatischen Polyestern A1 dar. Die Stärke der UV-Absorption hängt von der Wirkstoffkonzentration und der Wandstärke der Folie ab. Es lässt sich abschätzen, dass noch dünnere Folien < 12 μm ausreichend UV stabil ausgerüstet werden können. Weiterhin kann bei dickeren Folien die Wirkstoffkonzentration, im Vergleich zum Benzophenon reduziert werden.. Das Lichtschutzmittel zeigt, wie bereits erwähnt, eine inhärente Lichtstabilität und eine geringe Migrationstendenz im Vergleich zu Benzophenonen. Beide Eigenschaften tragen zur sicheren Stabilisierung der Folien bei.

Die sehr guten und reproduzierbaren Ergebnisse, die sich mit dem erfindungsgemäßen MB1 erzielen lassen, lassen erstmals ein Verfahren zu, bei dem man die Standzeit von Mulchfolien auf dem Feld in Abhängigkeit der Schichtdicke und der durchschnittlichen Sonneneinstrahlung geradezu maßschneidern kann. Damit wird die Anwendung von biologisch abbaubaren, transparenten oder transluzenten Folien für Feldfrüchte zugänglich, die aufgrund ihrer längeren Vegetationsperioden bisher nicht oder nicht wirtschaftlich zugänglich waren.

Bei schwarz eingefärbten Folien zeigte der erfindungsgemäße Lichtschutzmittel Masterbatch MB1 auch bei geringerer Konzentration eine sehr gute Lichtschutzwirkung. HALS Verbindungen wie Chimasorb 944 (B8), zeigten - alleine oder in Kombination mit dem erfindungsgemäßen Lichtschutzmittel eingesetzt - eine optimale UV Stabilisierung.

Beispiele, die die Wirkungsweise des Lichtschutzmittels belegen:

Eingesetzte Materialien:

i-1) teilaromatischer Polyester A1

ii-1) Polymilchsäure (PLA) Typ 4043D der Firma Natureworks LLC

iii-1) Calciumcarbonat vom Typ "Omyafilm 764 OM" der Fa. OMYA

iv-1) Talk vom Typ "Microtalk IT extra" der Fa. Mondo Minerals

v-1) Batch A: 20 Gew.-%iger Masterbatches von Joncryl ADR 4368 in Polyester A1 (Herstellung siehe EP-A 1838784)

vi-1) Batch MB1: 10 Gew.-%iger Masterbatches des Lichtschutzmittels B1 in Polyester A1 Lichtschutzmittel B1 entspricht dem Beispiel A der WO 2009/071475

vi-V2) Batch V-MB8: 10 Gew.-%iger Masterbatches des Lichtschutzmittels B8 in Poly ester A1.

670 kg i-1, 75 kg ii-1, 180 kg iii-1, 70 kg iv-1, 5 kg v-1, wurden auf einem Extruder vom Typ Werner & Pfleiderer MC-40 bei einer Massetemperatur von ca. 220-260 °C compoundiert. i-1, ii-1 und v-1 wurden per Coldfeed in Zone 0 dosiert, iii-1 und iv-1 wurden in Zone 4 per Seitenfeed zudosiert und rückwärtig in Zone 3 die eingetragene Luft durch eine Vakuumentgasung entfernt.

Der Compound wurde im Anschluss auf der Folienanlage 2 unter Zugabe von Komponente vi-1 bzw. vi-V2 zu Schlauchfolien mit einer Dicke von 12, 20, 50 und 100 Mikrometern verarbeitet. Die Folienmuster wurden anschließend analog den zuvor beschriebenen Masterbatch-Folien einer künstlichen Bewitterung (Xenonbogenlampe) nach DIN EN ISO 4892-2, Verfahren A für eine Zeitdauer von 250 h (dies entspricht einer Bewitterung von 3 Monaten bei Außenlagerung in Klimazone Südeuropa) unterzogen und mit einem Zugversuch gemäß ISO 527-3 nach der Bewitterung geprüft.

Tabelle 3

| Nr. | Blend | Foliendicke | ΔL [%] |
|---|---|---|---|
| 1 | 100 % Compound | 12 μm | 4% |
| 2 | 100 % Compound | 20 μm | 2% |
| 3 | 100 % Compound | 50 μm | 2% |
| 4 | 100 % Compound | 100 μm | 2% |
| 5 | 97 % Compound + 3 % vi-V2 | 12 μm | 4% |
| 6 | 97 % Compound + 3 % vi-V2 | 20 μm | 4% |
| 7 | 97 % Compound + 3 % vi-V2 | 50 μm | 7% |

(fortgesetzt)

| Nr. | Blend | Foliendicke | ΔL [%] |
|---|---|---|---|
| 8 | 97 % Compound + 3% vi-V2 | 100 μm | 56% |
| 9 | 95 % Compound + 5 % vi-V2 | 12 μm | 10% |
| 10 | 90 % Compound + 10% vi-V2 | 12 μm | 15% |
| 11 | 97 % Compound + 3 % vi-1 | 12 μm | 10% |
| 12 | 97 % Compound + 3 % vi-1 | 20 μm | 12% |
| 13 | 97 % Compound + 3 % vi-1 | 50 μm | 57% |
| 14 | 97 % Compound + 3 % vi-1 | 100 μm | 92% |
| 15 | 95 % Compound + 5 % vi-1 | 12 μm | 20% |
| 16 | 90 % Compound + 10 % vi-1 | 12 μm | 55% |

Auch die Ergebnisse in Tabelle 3 zeigen eindeutig den positiven Effekt des erfindergemäßen Masterbatches basierend auf dem Lichtschutzmittels 2-(4,6-Bis-biphenyl-4-yl-1,3,5-triazin-2-yl)-5-(2-ethyl-(n)-hexyloxy)phenol (Tabelle1: Nr. B1; Tabelle 3: vi-1). Auch in den erfindergemäßen Compounds auf Basis der Komponenten i-1, ii-1, iii-1 und iv-1 schnitten die mit dem erfindungsgemäßen Masterbatch MB-1 (vi-1) stabilisierten Folien deutlich besser als die mit dem Vergleichssystem V-MB8 (vi-V2) stabilisierten Folien. Die Stärke der UV-Absorption hängt von der Wirkstoffkonzentration und der Wandstärke der Folie ab. Transparente Folien mit einer Stärke ab 50 Mikrometern, können bereits mit einer Konzentration von ca. 3000 ppm an Lichtschutzmittel vi-1 stabilsiert werden. Sehr dünne transparente Folien auf Basis des Compounds benötigen in dem obengenannten Experiment eine Wirkstoffkonzentration von ca. 10.000 ppm Lichtschutzmittel vi-1.

Beispiele, die die verbesserte Reißfestigkeit der erfindungsgemäßen Folien belegen:

Beispiel 1:

Auf einem 60mm Leistritz Extruder mit einem L/D-Verhältnis von 46 wurden 720kg i-1 (Polyester A1), 80 kg ii-1 (PLA), 140kg iii-1 (Calciumcarbonat) und 60 kg iv-1 (Talk) bei einer Massetemperatur von ca. 220-260 °C compoundiert. Die Dosierung der Füllstoffe iii-1 und iv-1 erfolgte in Zonen 3 und 6, der Rest wurde in Zone 0 per Cold-Feed dosiert. In Zone 10 wurden die eingetragene Luft bzw. niedermolekulare Anteile durch eine Vakuumentgasung rückwärtig entfernt. Der Compound wurde anschließend auf der Folienanlage 1 unter Zugabe von 7 Gew.-% vi-1 (Masterbatch MB1) (per Cold-Feed am Aufschmelzextruder) zu einer 12 Mikrometer dicken Folie und 1400 mm breiten Folie bei einer Anlagengeschwindigkeit von 56 m/min verarbeitet. Die Folie ließ sich problemlos verarbeiten, die Stabilität der Folienblase wurde als gut eingestuft.

Beispiel 2:

Auf einem 60mm Leistritz Extruder mit einem L/D-Verhältnis von 46 wurden 715kg i-1 (Polyester A1), 80 kg ii-1 (PLA), 140kg iii-1 (Calciumcarbonat), 60 kg iv-1 (Talk) sowie 5kg v-1 (Joncryl Masterbatch), bei einer Massetemperatur von ca. 220-260 °C compoundiert. Die Dosierung der Füllstoffe iii-1 und iv-1 erfolgte in Zonen 3 und 6 , der Rest wurde in Zone 0 per Cold-Feed dosiert. In Zone 10 wurden die eingetragene Luft bzw. niedermolekulare Anteile durch eine Vakuumentgasung rückwärtig entfernt. Der Compound wurde anschließend auf der Folienanlage 1 unter Zugabe von 7 Gew.-% vi-1 (Masterbatch MB1) (per Cold-Feed am Aufschmelzextruder) zu einer 12 Mikrometer dicken und 1400 mm breiten Folie bei einer Anlagengeschwindigkeit von 56 m/min verarbeitet. Die Folie ließ sich problemlos verarbeiten, die Stabilität der Folienblase wurde als sehr gut eingestuft.

Vergleichsbeispiel 1:

Auf einem 60mm Leistritz Extruder mit einem L/D-Verhältnis von 46 wurden 720kg i-1 (Polyester A1), 80 kg ii-1 (PLA), 200kg iii-1 (Calciumcarbonat) bei einer Massetemperatur von ca. 220-260 °C compoundiert. Die Dosierung des Füllstoffs iii-1 erfolgte in Zone 3, der Rest wurde in Zone 0 per Cold-Feed dosiert. In Zone 10 wurden die eingetragene Luft bzw. niedermolekulare Anteile durch eine Vakuumentgasung rückwärtig entfernt. Der Compound wurde anschließend auf der Folienanlage 1 unter Zugabe von 7 Gew.-% vi-1(Masterbatch MB1) (per Cold-Feed am Aufschmelzextruder) zu einer 12 Mikrometer dicken und 1400 mm breiten Folie bei einer Anlagengeschwindigkeit von 56 m/min Folie verarbeitet. Die Folie war zunächst sehr instabil und ließ sich erst nach einigen Maßnahmen zur Stabilisierung (z.B. Absenkung des Kalibrierkorbes) in dieser Dicke verarbeiten. Die Stabilität der Folienblase ist daher nur als ausreichend zu bewerten.

Die Ergebnisse der Weiterreißexperimente der Beispiele 1 und 2 sowie des Vergleichsbeispiels 1 sind in Tabelle 4 zusammengefasst. Man erkennt deutlich, dass das erfindergemäße Beispiel 1 (Kombination der Füllstoffe iii-1 und iv-1) und die besonders bevorzugte Ausführungsform in Beispiel 2 (Kombination aus iii-1 und iv-1 sowie Zusatz von v-1) sowohl in Maschinenlängsrichtung (Machine direction = MD) als auch vor allem in Maschinenquerrichtung (Cross direction = CD) signifikant bessere Weitereißfestigkeiten aufweisen als das Vergleichsbeispiel 1 (Zusatz von ausschließlich iii-1).

Tabelle 4:

| Prüfung | Foliendicke | Beispiel 1 | Beispiel 2 | Vergleichsbeispiel 1 |
|---|---|---|---|---|
| Elmendorf-Test * Maschinenrichtung (MD) | 12 $\mu$m | 936 mN | 1309 mN | 874 mN |
| Elmendorf-Test* Maschinenquerrichtung (CD) | 12 $\mu$m | 878 mN | 1010 mN | 445 mN |
| Elmendorf-Test* Maschinenrichtung (MD) | 23 $\mu$m | - | 1782 mN | 1657 mN |
| Elmendorf-Test* Maschinenquerrichtung (CD) | 23 $\mu$m | - | 1949 mN | 810 mN |
| * Norm: EN ISO 6383-2:2004 | | | | |

Beispiel 3:

9720g i-1 (Polyester A1), 2160g ii-1 (PLA), 2250g iii-1 (Calciumcarbonat), 750g iv-1 (Talk) und 120g v-1 (Joncryl Masterbatch) wurden auf einem Extruder vom Typ Werner & Pfleiderer MC-26 bei Massetemperatur von ca. 220-260 °C compoundiert. Die Komponenten i-1, ii-1 und v-1 wurden per Coldfeed in Zone 0 dosiert, die Füllstoffe iii-1 und iv-1 wurden in Zone 4 per Seitenfeed zudosiert und rückwärtig in Zone 3 die eingetragene Luft durch eine Vakuumentgasung entfernt.

Der Compound wurde im Anschluss auf der Folienanlage 2 zu einer Schlauchfolie mit 30 Mikrometern Dicke verarbeitet.

Vergleichsbeispiel 2:

9690g i-1 (Polyester A1), 2160g ii-1 (PLA), 3000g iii-1 (Calciumcarbonat) und 150g v-1 (Joncryl Masterbatch) wurden auf einem Extruder vom Typ Werner & Pfleiderer MC-26 bei einer Massetemperatur von ca. 220-260 °C compoundiert. Die Komponenten i-1, ii-1 und v-1 wurden per Coldfeed in Zone 0 dosiert, der Füllstoff iii-1 wurde in Zone 4 per Seitenfeed zudosiert und rückwärtig in Zone 3 die eingetragene Luft durch eine Vakuumentgasung entfernt.

Der Compound wurde im Anschluss auf der Folienanlage 2 zu einer Schlauchfolie mit 30 Mikrometern Dicke verarbeitet.

Vergleichsbeispiel 3:

24,3kg i-1 (Polyester A1), 5,4kg ii-1 (PLA), und 0,3 kg v-1 (Joncryl Masterbatch) wurden auf einem Extruder vom Typ Werner & Pfleiderer MC-26 bei einer Massetemperatur von ca. 220-260 °C compoundiert. Alle Einsatzstoffe wurden per Cold-Feed zudosiert.

Der Compound wurde im Anschluss auf der Folienanlage 2 zu einer Schlauchfolie mit 30 Mikrometern Dicke verarbeitet.

Die Prüfung der Weiterreißfestigkeiten von Beispiel 3 sowie der Vergleichsbeispiele 2 und 3 sind in Tabelle 5 zusammengefasst. Man erkennt deutlich, dass das erfindergemäße Beispiel 3 in Maschinenlängsrichtung (Machine direction = MD) eine signifikant bessere Weitereißfestigkeit aufweist als die Vergleichsbeispiele 2 und 3, welches den etwas geringeren Wert in Maschinenquerrichtung überkompensiert.

Tabelle 5:

| Prüfung | Foliendicke | Beispiel 3 | Vergleichsbeispiel 2 | Vergleichsbeispiel 3 |
|---|---|---|---|---|
| Elmendorf-Test* Maschinenrichtung (MD) | 30 $\mu$m | 1628 mN | 1100 mN | 735 mN |

(fortgesetzt)

| Prüfung | Foliendicke | Beispiel 3 | Vergleichsbeispiel 2 | Vergleichsbeispiel 3 |
|---|---|---|---|---|
| Elmendorf-Test* Maschinenquerrichtung (CD) | 30 $\mu$m | 635 mN | 717 mN | 604 mN |
| * Norm: EN ISO 6383-2:2004 | | | | |

Der Vergleich der Ergebnisse der Tabellen 4 und 5 zeigt ferner, dass bei ähnlichen Füllstoffkonzentrationen die in Tabelle 5 genannten Folien (mit einem höheren Anteil an Komponente ii-1 (PLA) in der Polymermatrix) deutlich schlechtere Weiterreißfestigkeiten aufweisen als die Folien aus Tabelle 4. Da die Weiterreißfestigkeit nicht linear mit der Foliendicke skaliert und bei dickeren Folien normalerweise überproportional zunimmt, ist der Unterschied sogar noch stärker ausgeprägt, als es der Vergleich der reinen Zahlenwerte vermuten lässt. Der geringere Anteil an ii-1 in den erfindergemäßen Beispielen 1 und 2 ist somit besonders bevorzugt, um Folien mit hohen Weiterreißfestigkeiten zu erzielen.

**Patentansprüche**

1. Biologisch abbaubare Polyesterfolie enthaltend:

   i) 75 bis 100 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;
   ii) 0 bis 25 Gew.-%, bezogen auf das Gesamtgewicht der Komponenten i bis ii, Polymilchsäure;
   iii) 10 bis 25 Gew.-%, bezogen auf das Gesamtgewicht der Komponenten i bis v, Calciumcarbonat;
   iv) 3 bis 15 Gew.-%, bezogen auf das Gesamtgewicht der Komponenten i bis v, Talk;
   v) 0 bis 1 Gew.-%, bezogen auf das Gesamtgewicht der Komponenten i bis v, eines Epoxidgruppen-haltigen Copolymers auf Basis Styrol, Acrylsäureester und/oder Methacrylsäureester;
   vi) 0 bis 2 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

2. Biologisch abbaubare Polyesterfolie nach Anspruch 1 enthaltend:

   i) 80 bis 95 Gew.-%, bezogen auf das Gesamtgewicht der Komponenten i bis ii, eines biologisch abbaubaren Polyesters auf Basis von aliphatischen und/oder aromatischen Dicarbonsäuren und aliphatischen Dihydroxyverbindung;
   ii) 5 bis 20 Gew.-%, bezogen auf das Gesamtgewicht der Komponenten i bis ii, Polymilchsäure;
   iii) 10 bis 20 Gew.-%, bezogen auf das Gesamtgewicht der Komponenten i bis v, Calciumcarbonat;
   iv) 5 bis 10 Gew.-%, bezogen auf das Gesamtgewicht der Komponenten i bis v, Talk;
   v) 0,01 bis 0,5 Gew.-%, bezogen auf das Gesamtgewicht der Komponenten i bis v, eines Epoxidgruppen-haltigen Copolymers auf Basis Styrol, Acrylsäureester und/oder Methacrylsäureester;
   vi) 0 bis 2 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

3. Biologisch abbaubare Polyesterfolie nach einem der Ansprüche 1 oder 2 enthaltend:

   vi) 0,1 bis 1,5 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

4. Biologisch abbaubare Polyesterfolie nach Anspruch 1 bis 3, wobei der biologisch abbaubare Polyester (Komponente i) ein aliphatisch-aromatischer Polyester ausgewählt aus der Gruppe bestehend aus: Polybutylenadipatterephthalat (PBAT), Polybutylensebacatterephthalat (PBSeT) oder Polybutylensuccinatterephthalat (PBST) ist.

5. Biologisch abbaubare Polyesterfolie nach Anspruch 1 bis 3, wobei der biologisch abbaubare Polyester (Komponente i) ein aliphatischer Polyester ausgewählt aus der Gruppe bestehend aus: Polybutylensuccinat (PBS), Polybutylenadipat (PBA), Polybutylensuccinatadipat (PBSA), Polybutylensuccinatsebacat (PBSSe), Polybutylensebacat (PBSe) ist.

**6.** Verwendung der Polyesterfolie nach Anspruch 1 oder 2 zur Herstellung von Einkaufstaschen, Kompostbeuteln oder Inlinern für die Biomülltonne.

**7.** Verwendung der Polyesterfolie nach Anspruch 3 zur Herstellung von Agrarprodukten ausgewählt aus der Gruppe bestehend aus Mulchfolien, Abdeckfolien, Silo-Folien, Folienbändchen, Geweben, Vlies-Stoffen, Clips, Textilien, Zwirnen, Fischernetzen, Umverpackungen, Schwergutsäcken, Blumentöpfen.

**8.** Masterbatch enthaltend

   i) 75 bis 95 Gew.-%, bezogen auf das Gesamtgewicht der Komponenten, eines biologisch abbaubaren Polyesters ausgewählt aus der Gruppe bestehend aus: Polyester, auf Basis von aliphatischen und/oder aromatischen Dicarbonsäuren und aliphatischen Dihydroxyverbindung, und Polymilchsäure;
   vi) 5 bis 25 Gew.-%, bezogen auf das Gesamtgewicht der Komponenten, 2-(4,6-Bis-biphenyl-4-yl-1,3,5-triazin-2-yl)-5-(2-ethyl-(n)-hexyloxy)phenol.

**9.** Verfahren zur Herstellung eines Agrarprodukts unter Verwendung eines Masterbatches gemäß Anspruch 8.

**10.** Verfahren zur Herstellung von Mulchfolien enthaltend:

   i) 75 bis 100 Gew.-%, bezogen auf das Gesamtgewicht der Komponenten i bis ii, eines biologisch abbaubaren Polyesters auf Basis von aliphatischen und/oder aromatischen Dicarbonsäuren und einer aliphatischen Dihydroxyverbindung;
   ii) 0 bis 25 Gew.-%, bezogen auf das Gesamtgewicht der Komponenten i bis ii, Polymilchsäure;
   iii) 0 bis 25 Gew.-%, bezogen auf das Gesamtgewicht der Komponenten i bis v, Calciumcarbonat;
   iv) 0 bis 15 Gew.-%, bezogen auf das Gesamtgewicht der Komponenten i bis v, Talk;
   v) 0 bis 1 Gew.-%, bezogen auf das Gesamtgewicht der Komponenten i bis v, eines Epoxidgruppen-haltigen Copolymers auf Basis Styrol, Acrylsäureester und/oder Methacrylsäureester;
   vi) 0,1 bis 1,5 Gew.-%, bezogen auf das Gesamtgewicht der Komponenten i bis v, 2-(4,6-Bis-biphenyl-4-yl-1,3,5-triazin-2-yl)-5-(2-ethyl-(n)-hexyloxy)phenol.

Europäisches
Patentamt

European
Patent Office

Office européen
des brevets

## EUROPÄISCHER RECHERCHENBERICHT

Nummer der Anmeldung

EP 11 16 5413

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | WO 2011/054786 A1 (BASF SE [DE]; AUFFERMANN JOERG [DE]; SKUPIN GABRIEL [DE]; KUENKEL ANDR) 12. Mai 2011 (2011-05-12) * Ansprüche 1,4,5 * ----- | 1-10 | INV. C08K3/26 C08K3/36 C08K13/02 C08L67/02 |
| X | DE 199 12 996 A1 (WOLFF WALSRODE AG [DE]) 28. September 2000 (2000-09-28) * Zusammenfassung; Ansprüche 1,3,7 * * Seite 4, Zeilen 33-35 * * Seite 5, Zeilen 5,7,53-56 * ----- | 1-10 | ADD. C08K5/3492 C08L25/14 C08L67/04 |
| X | DE 10 2007 026719 A1 (FRAUNHOFER GES FORSCHUNG [DE]; FKUR KUNSTSTOFF GMBH [DE]) 18. Dezember 2008 (2008-12-18) | 1-10 | |
| Y | * Ansprüche 1,4,8,23,26 * * Absätze [0026], [0034], [0035], [0039], [0043], [0048], [0062], [0083] - [0087], [0107] * ----- | 1-10 | |
| Y | WO 2009/071475 A1 (CIBA HOLDING INC [CH]; BRUNNER FREDERIC [CH]; VON BUEREN MARTIN [CH];) 11. Juni 2009 (2009-06-11) * Ansprüche 5,6,11,15,17,18-20 * ----- | 1-10 | RECHERCHIERTE SACHGEBIETE (IPC) C08K C08L |

Der vorliegende Recherchenbericht wurde für alle Patentansprüche erstellt

| Recherchenort | Abschlußdatum der Recherche | Prüfer |
|---|---|---|
| München | 7. September 2011 | Schütte, Maya |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 16 5413

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2011

| Im Recherchenbericht angeführtes Patentdokument | Datum der Veröffentlichung | Mitglied(er) der Patentfamilie | Datum der Veröffentlichung |
|---|---|---|---|
| WO 2011054786 A1 | 12-05-2011 | KEINE | |
| DE 19912996 A1 | 28-09-2000 | AU 3657800 A | 09-10-2000 |
| | | WO 0056807 A1 | 28-09-2000 |
| DE 102007026719 A1 | 18-12-2008 | KEINE | |
| WO 2009071475 A1 | 11-06-2009 | AU 2008333325 A1 | 11-06-2009 |
| | | CA 2706097 A1 | 11-06-2009 |
| | | CN 101939305 A | 05-01-2011 |
| | | EP 2229370 A1 | 22-09-2010 |
| | | JP 2011505400 A | 24-02-2011 |
| | | KR 20100103527 A | 27-09-2010 |
| | | US 2011027509 A1 | 03-02-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2002016468 A
- WO 2009071475 A
- WO 9209654 A
- WO 9615173 A
- WO 9812242 A
- WO 2006097353 A
- WO 2006097354 A
- WO 2010034710 A
- WO 2010034711 A
- EP 1838784 A